## Europäisches Patentamt
## European Patent Office
## Office européen des brevets

(19)

(11) Veröffentlichungsnummer: **0 212 272**
**B1**

(12) **EUROPÄISCHE PATENTSCHRIFT**

(45) Veröffentlichungstag der Patentschrift:
03.10.90

(51) Int. Cl.⁵: **H04M 3/36, H04Q 3/72**

(21) Anmeldenummer: **86109847.3**

(22) Anmeldetag: **17.07.86**

(54) **Schaltungsanordnung für Fernmeldeanlangen, insbesondere Fernsprechvermittlungsanlagen, mit Abfragestellen zyklisch ansteuernden Informationsabfrageeinrichtungen.**

(30) Priorität: **14.08.85 DE 3529165**

(43) Veröffentlichungstag der Anmeldung:
**04.03.87 Patentblatt 87/10**

(45) Bekanntmachung des Hinweises auf die Patenterteilung:
**03.10.90 Patentblatt 90/40**

(84) Benannte Vertragsstaaten:
**AT BE CH DE FR GB IT LI NL SE**

(56) Entgegenhaltungen:
**BE-A- 654 496**
**DE-A- 3 443 616**
**DE-B- 1 537 828**

**IBM TECHNICAL DISCLOSURE BULLETIN, Band 20,
Nr. 2, Juli 1977, Seiten 773,774, New York, US; R.W.
FARR et al.: "Dynamically optimized polling system"
PROCEEDINGS OF THE 10TH INTERNATIONAL
TELETRAFFIC CONGRESS, 9.-15. Juni 1983,
Session 5.2, Papier 4, Seiten 1-8, Montreal, CA; L.J.
FORYS: "Performance analysis of a new overload
strategy"**

(73) Patentinhaber: **Siemens Aktiengesellschaft,
Wittelsbacherplatz 2, D-8000 München 2(DE)**

(72) Erfinder: **Jans, Herbert, Dr.-Ing., Ammerseestrasse 34,
D-8027 Neuried(DE)**

**Beschreibung**

Die Erfindung betrifft eine Schaltungsanordnung für Fernmeldeanlagen, insbesondere Fernsprechvermittlungsanlagen, mit eine Vielzahl von Abfragestellen zyklisch ansteuernden Informationsabfrageeinrichtungen, die die Abfragestellen zum Abruf gegebenenfalls vorliegender Informationen mit hinsichtlich der verschiedenen Abfragestellen unterschiedlichen Abfragefrequenzen ansteuern und die Abfragefrequenz jeweils bezüglich einer Abfragestelle in Abhängigkeit vom Auftreten einer abzurufenden Information ändern, und mit den Informationsabfrageeinrichtungen zugeordneten Abfragespeichern, in denen für jede der Abfragestellen einzeln die individuelle Anzahl von Ansteuerungsvorgängen innerhalb eines jeweils sämtliche Abfragestellen erfassenden Gesamtansteuerzyklusses gespeichert ist, wobei in dem Abfragespeicher für jede der Abfragestellen die individuelle Anzahl von Ansteuerungsvorgängen mittels entsprechend ein- oder mehrmaliger Speicherung ihrer jeweiligen Adresse an einer dementsprechenden Zahl von Speicherstellen gespeichert ist, die innerhalb der zyklischen Folge der Gesamtheit der Speicherstellen verteilt, insbesondere regelmäßig verteilt sind und sukzessive nacheinander gelesen werden, und in denen in Zuordnung zu den Ansteuerungsadressen der Abfragestellen Zusatzinformationen speicherbar sind, die in Abhängigkeit von den einzelnen Abfragevorgängen laufenden Veränderungen unterliegen, und mit deren Hilfe die Reihenfolge des Lesens der Ansteuerungsadressen und damit die Reihenfolge der jeweils weiteren Ansteuerungen der Abfragestellen steuerbar ist.

Eine Schaltungsanordnung ähnlicher Art (vergleiche deutsche Offenlegungsschrift 3 443 616 = 84 P 1950) ermöglicht es, Abfragestellen mit unterschiedlicher Häufigkeit abzufragen. Abfragestellen können einzelne Scan-Punkte, z.B. in teilnehmerindividuellen Schalteinrichtungen wie Verbindungssätzen oder Teilnehmeranschlußschaltungen, sein. Dies ist in weiteren Einzelheiten beispielsweise in der deutschen Offenlegungsschrift 2 748 795 (VPA 77 P 6230) beschrieben. Eintreffende Schaltkennzeichen werden dadurch erkannt, daß bei den an einem Scan-Punkt vorgenommenen Abfragevorgängen von einem bestimmten Zeitpunkt an andere Abfrageergebnisse gewonnen werden als davor und zwar für die Dauer des Schaltkennzeichens. Die zuletzt genannte Offenlegungsschrift beschreibt in diesem Zusammenhang, daß z.B. in Verbindungssätzen von Teilnehmerstellen abgegebene Wahlimpulse eintreffen. Die Scan-Punkte werden normalerweise in einem relativ langsamen Rhythmus abgetastet. Wird durch einen Abfragevorgang der Beginn eines Wahlimpulses erkannt, so wird der relativ langsame Abfragerhythmus durch einen relativ schnellen Abfragerhythmus ersetzt. Dadurch wird bei einer Anordnung, wie sie in der letztgenannten Offenlegungsschrift beschrieben ist, die Möglichkeit geschaffen, das Ende eines jeweiligen Wahlimpulses zeitlich möglichst exakt zu erfassen, und damit die Dauer des betreffenden Wahlimpulses. Auf diese Weise können z.B. Wahlimpulse und durch Impulse von anderer Dauer gebildete Schaltkennzeichen mit großer Sicherheit voneinander unterschieden werden.

Wird in diesem zuletzt genannten bekannten Falle ein einen Impulsbeginn anzeigendes Abfrageergebnis ermittelt, so wechselt also der Abfragerhythmus einer relativ langsamen Folge zu einer relativ schnellen Folge. Wird beim zweiten Abfragevorgang (oder beim dritten Abfragevorgang) nach einem einen Impulsbeginn anzeigenden Abfrageergebnis ein weiteres Abrageergebnis gleichen Inhalts ermittelt, so wird hieran erkannt, daß es sich tatsächlich nicht um einen Impulsbeginn sondern um eine Störung gehandelt hat. Daraufhin wird für die weiteren Abfragevorgänge der Abfragerhythmus wieder von der relativ schnellen Folge zu der langsamen Folge hin gewechselt.

In dem durch die zuletzt genannte deutsche Offenlegungsschrift bekannten Falle dient der Wechsel des Abfragerhythmusses dazu, die Abfragekapazität einer Abfrageeinrichtung durch Verlangsamung des Abfragerhythmusses zu erhöhen, indem dadurch die Zahl der Abfragestellen in entsprechendem Maße ebenfalls erhöht werden kann, wobei trotzdem eine zeitlich relativ exakte Erfassung von Schaltkennzeichen bestimmter und individueller Dauer gewährleistet wird. Handelt es sich jedoch nicht um ein zyklisches Scannen von Scan-Punkten zur Erfassung von Schaltkennzeichen durch Unterscheidung des Schaltkennzeichenzustandes vom hierzu alternativen Schaltzustand (z.B. Impulspause und "Zwischenwahlzeit"), sondern um ein Abrufen vollständiger Informationen von einzelnen Abfragestellen, so tritt ein anderes Problem in den Vordergrund. Das Aufkommen von abzurufenden Informationen kann bei verschiedenen Abfragestellen sehr unterschiedlich sein. Werden die verschiedenen Abfragestellen zyklisch gleichmäßig angesteuert, so kann es Abfragestellen geben, wo sich die abzurufenden Informationen bereits stauen, während es andere Abfragestellen gibt, bei deren Ansteuerung und Abfragung nur sporadisch Informationen zum Abruf vorliegen. In diesem Zusammenhang ist gegenüber dem Prinzip des zyklischen Scannens auch das Prinzip bekannt, Abfragestellen aufgrund von individuell abgegebenen Anforderungssignalen anzusteuern. Nachteilig ist jedoch der Aufwand, der für die Erzeugung, Abgabe, Übertragung, Aufnahme und Auswertung dieser Anforderungssignale getrieben werden muß, sowie zur sukzessiven Bearbeitung dieser Anforderungssignale. Deshalb geht die Erfindung von einer Schaltungsanordnung der eingangs angegebenen Art aus, bei der die verschiedenen Abfragestellen zyklisch angesteuert werden.

In Schaltungsanordnungen der eingangs angegebenen Art kann es nun vorkommen, daß das Aufkommen von abzurufenden Informationen an den verschiedenen Abragestellen nicht nur ungleich ist sondern - pro Abfragestelle - außerdem Schwankungen unterliegt, und daß ein sprunghafter Wechsel des Andranges von abzurufenden Informationen an einzelnen Abfragestellen auftreten kann. Um diesem Problem zu begegnen, wurde bereits durch die deutsche Offenlegungsschrift 34 43 616 (VPA 84 P 1950) eine Schaltungsanordnung vorgeschlagen, in der vorgesehen ist, daß eine sukzessive Abfragezyklen abwickelnde Informationsabfrageeinrichtung zur Zuteilung von Abfragefrequenzen für die Abfragestellen Zykluszahlen diesen zuordnet und speichert, die jeweils die Anzahl von Abfragezyklen angeben, bei denen die betreffende Abragestelle je einmal angesteuert wird. Eine Abfragestelle wird demgemäß nur einmal in einem Abfragezyklus oder in zwei oder mehr Abfragezyklen abgefragt, und zwar nach Maßgabe der jeweils gespeicherten Zykluszahl. Ferner ist gemäß dieser Schaltungsanordnung vorgeschlagen, daß die Informationsabfrageeinrichtung bei jedesmaligem Erhalt einer Information von einer Abfragestelle diese sofort beim nächsten Abfragezyklus erneut ansteuert und entweder dies bei abermaligem Erhalt einer Information wiederholt und im gegenteiligen Falle von da an den Abfragerhythmus nach Maßgabe der für diese Abfragestelle gespeicherten Zykluszahl wieder fortsetzt. Demgemäß wird also der Abfragerhythmus pro Abfragestelle von einem der betreffenden Abfragestelle individuell zugeordneten Abfragerhythmus auf einen einheitlichen maximalen Abfragerhythmus heraufgesetzt. Darüber hinaus ist gemäß der genannten vorgeschlagenen Schaltungsanordnung vorgesehen, daß die von den verschiedenen Abfragestellen aufgenommenen Informationen in Zeitintervallen pro Abfragestelle gezählt werden und die Zykluszahlen umgekehrt proportional nach Maßgabe dieser Zählergebnisse nach jedem Zeitintervall erneut angeglichen werden, z.B. jeweils um den Wert 1. Danach werden also die pro Abfragestelle gespeicherten Zykluszahlen je nach dem tatsächlichen Verkehrsaufkommen dynamisch angepaßt.

Bei einer Schaltungsanordnung dieser Art bewirkt also ein stärkerer Andrang von abzufragenden Informationen an einer Abfragestelle, daß diese anstatt nach Maßgabe der jeweils gespeicheren Zykluszahl vielmehr bei jedem Abfragezyklus abgefragt werden. Dies bedeutet, daß diese Abfragestellen mit zurzeit stärkerem Andrang von abzufragenden Informationen gleich oft abgefragt werden. Ein stärkerer Andrang von abzufragenden Informationen an allen Abfragestellen würde zur Folge haben, daß sämtliche Abfragestellen gleich oft abgefragt werden. Dadurch würde der durch die pro Abfragestelle gespeicherten Zykluszahlen erzeugte Effekt, daß die verschiedenen Abfragestellen unterschiedlich oft abgefragt werden, gerade in Zeiten besonders starken Andranges von abzufragenden Informationen völlig nivelliert werden.

Eine Schaltungsanordnung mit den eingangs aufgeführten Merkmalen ist durch die deutsche Auslegeschrift 1 537 828 bekannt. Hierin sind also unter anderem auch in Zuordnung zu den Ansteuerungsadressen der Abfragestellen Zusatzinformationen speicherbar, die in Abhängigkeit von den einzelnen Abfragevorgängen laufenden Veränderungen unterliegen, und mit deren Hilfe die Reihenfolge des Lesens der Ansteuerungsadressen und damit die Reihenfolge der jeweils weiteren Ansteuerungen der Abfragestellen steuerbar ist. In diesem bekannten Falle werden in Zuordnung zu jedem Pufferspeicher je eine Bedienungsziffer, eine Bevorzugungsziffer und eine Belegungszahl gespeichert. Die Bedienungsziffern werden im Zuge der Bedienungsvorgänge an den einzelnen Pufferspeichern von Mal zu Mal verändert, und die jeweils in einem Zeitpunkt für die verschiedenen Pufferspeicher einzeln vorliegenden Bedienungsziffern sind maßgebend für die Aufeinanderfolge der der weiteren Bedienungsvorgänge bezüglich dieser Pufferspeicher. Hierdurch kann es als bereits bekannt angesehen werden, daß in Zuordnung zu den Ansteuerungsadressen der Abfragestellen Zusatzinformationen gespeichert werden, die einerseits in Abhängigkeit von den einzelnen Abfragevorgängen laufenden Veränderungen unterliegen, und mit deren Hilfe andererseits die Reihenfolge der jeweils weiteren Ansteuerungen der Abfragestellen steuerbar ist.

Für die Erfindung besteht die Aufgabe, in einer Schaltungsanordnung der eingangs angegebenen Art dafür zu sorgen, daß bei ungleichem Aufkommen von abzurufenden Informationen an den verschiedenen Abfragestellen, sowie bei diesbezüglichen Schwankungen und bei sprunghaftem Wechsel des Andranges von abzurufenden Informationen an einzelnen Abfragestellen die für diese vorgesehene unterschiedliche Abfragehäufigkeit nicht einfach nivelliert wird, wobei jedoch die Informationsabfrageeinrichtungen auf den Andrang von abzufragenden Informationen reagieren sollen, um einer Staubildung bezüglich bei den Abfragestellen abzufragender Informationen entgegenzuwirken. In diesem Zusammenhang besteht für die Erfindung des weiteren die Aufgabe, sowohl den schaltungstechnischen Aufwand als auch den steuerungstechnischen Arbeitsaufwand für die Berücksichtigung des schwankenden und teils auch sprunghaft wechselnden Andrangs von abzufragenden Informationen gegenüber der genannten vorgeschlagenen Schaltungsanordnung zu verringern. Dabei soll die Erfindung besonders der Tatsache Rechnung tragen, daß die Anzahl der pro Abfragestelle vorliegenden einzeln nacheinander abzufragenden Informationen offen ist, daß also pro Abfragestelle auch je mehrere Informationen zugleich abfragebereit vorliegen können, und daß unter besonderer Berücksichtigung dessen diejenigen Mittel und Vorgänge besonders einfach gestaltet sein sollen, durch die die Abfragevorgänge dem schwankenden und teils sprunghaft wechselnden Andrang an abzufragenden Informationen angepaßt werden.

Die Erfindung löst die gestellte Aufgabe dadurch, daß die Zusatzinformation auf ein Merkbit beschränkt ist und an der Speicherstelle einer jeden Ansteuerungsadresse einer jeden Abfragestelle zusammen mit dieser Anteuerungsadresse speicherbar ist, und daß dieses Merkbit wechselnd speicherbar und löschbar ist in der Weise, daß es einerseits immer dann gewonnen und gespeichert wird, wenn bei Ansteuerung einer Abfragestelle eine dabei erwartete Information ausbleibt, und daß andererseits bei Erreichen einer Speicherstelle, an der bei der betreffenden Ansteuerungsadresse bereits ein Merkbit gespeichert ist, sowohl eine Ansteuerung der betreffenden Abfragestelle, insbesondere ein Lesen der an der Speicherstelle gespeicherten Ansteuerungsadresse, mittels des Merkbits verhindert wird, als auch ·das gespeicherte Merkbit wieder gelöscht wird.

Im Gegensatz zu dem oben zuletzt erwähnten bekannten Falle ist die dort mehrgestaltige und entsprechend umfangreiche, also datenverarbeitungstechnisch bereits etwas aufwendige Zusatzinformation erfindungsgemäß auf ein Merkbit beschränkt. Im bekannten Falle ist diese Zusatzinformation die Bedienungsziffer samt Bevorzugungsziffer und Belegungszahl. Im Zusammenhang der bekannten Technik muß die Bedienungsziffer pro Pufferspeicher viele verschiedene Werte annehmen können. Sie wird ausgewertet zur obigen Reihenfolgesteuerung in Zusammenhang mit Bevorzugungsziffer und Belegungszahl. Deren Auswertung ist insgesamt gesehen ein komplizierter Datenverarbeitungsvorgang. Im erfindungsgemäßen Falle bedarf es nur eines Merkbits, das bei einem Ansteuerungsvorgang jeweils dann gewonnen und gespeichert wird, wenn bei diesem Ansteuerungsvorgang eine erfragte Information ausbleibt, und das dann, wenn bei Erreichen einer einer Ansteuerungsadresse entsprechenden Speicherstelle das Merkbit bereits vorgefunden wird, eine Ansteuerung ein Mal unterbindet, wobei dieses Merkbit dann zugleich wieder gelöscht wird. Insoweit ist also die Speicherung und Auswertung nur eines Merkbits eine wesentlich einfachere und weniger aufwendige Sache als die Speicherung und Verarbeitung einer Bedienungsziffer. Ferner ist im Gegensatz zum zuvor angesprochenen bekannten Falle das Merkbit erfindungsgemäß zusammen mit der betreffenden Ansteuerungsadresse jeweils an deren Speicherstelle mitgespeichert. Dies vereinfacht seine Auswertung zur einmaligen Ansteuerungs-Verhinderung. Wird bei Erreichen einer solchen Speicherstelle das Merkbit bereits vorgefunden, so wird die Ansteuerung der der gespeicherten Ansteuerungsadresse entsprechenden Abfragestelle kurzum verhindert, wobei das Merkbit dann auch wieder gelöscht wird. Diese Verhinderung durch ein gespeichertes Merkbit (also eine einmalige Verhinderung pro Merkbit) ist gegenüber der bekannten Technik auswertungstechnisch eine sehr viel einfachere Verfahrensweise zur Herabsetzung der Anzahl der Abfragevorgänge pro Abfragestelle. Darüberhinaus wird im bekannten Falle beim Erreichen einer Speicherstelle, an der das Merkbit gespeichert ist, die besagte Speicherstelle bis zum Ende des betreffenden Bedienungszyklusses nicht ausgelesen wird, wohingegen im erfindungsgemäßen Falle, in dem eine Ansteuerungsadresse ja mehrmals an entsprechend mehreren Speicherstellen gespeichert sein kann, und in dem in einem Ansteuerungszyklus eine Abfragestelle gegebenenfalls demgemäß ebenso oft angesteuert werden kann, nach Erreichen einer Speicherstelle, an der zusammen mit der betreffenden Ansteuerungsadresse das Merkbit gespeichert war, und nach dementsprechender je einmaliger Ansteuerungsverhinderung wieder die Möglichkeit gegeben wird, daß diese Abfragestelle beim Erreichen einer weiteren Speicherstelle, an der erneut die Ansteuerungsadresse dieser Abfragestelle (und hier ohne Merkbit) gespeichert ist, dann nicht übersprungen, sondern angesteuert wird. Im bekannten Falle wird dagegen die besagte Speicherstelle bis zum Ende des betreffenden Bedienungszyklusses nicht ausgelesen und der betreffende Pufferspeicher bis dahin nicht wieder bedient. Demgegenüber bewirkt das Merkbit also jeweils immer nur eine einmalige Ansteuerungs-Verhinderung, d.h. eine Ansteuerungs-Verminderung maximal nur im Verhältnis 2:1.

Durch das IBM Technical disclosure bulletin, Band 20, Nr. 2, Juli 1977, Seite 773 ff, New York ist außerdem eine Technik bekannt, in der für den Fall eines Defekts einer von einer Anzahl von Abfragestellen vorgesehen ist, daß pro Abfragestelle ein aktiver Pegel (ein veränderbarer Zahlenwert) mit dem Ausgangswert 1 vorgesehen ist, sowie ein erster Schwellenwert (K1) und ein zweiter Schwellenwert (K2) eingestellt sind. Gibt eine Abfragestelle in einem Abfragezyklus störungsbedingt (Defekt-Fall) erstmalig keine Information her, so wird der Pegel von seinem Ausgangswert 1 pro Ansteuerungszyklus um je 1 erhöht. Befindet sich der Pegel einer Abfragestelle zwischen den Werten 1 und K1, so wird diese Abfragestelle bei jedem der betreffenden Abfragezyklen nicht abgefragt, sondern· der Pegel wieder um jeweils den Wert 1 erhöht. Erreicht der Pegel den Wert K1, so wird diese Abfragestelle wieder abgefragt. Gibt sie dabei eine Information her, so wird der Pegel auf 1 zurückgesetzt; anderenfalls wird der Pegel wieder um den Wert von je 1 pro Abfragezyklus erhöht. Hat der Pegel einen Wert zwischen K1 und K2, so wird die betreffende Abfragestelle nicht abgefragt; erreicht es den Wert K2, so wird es auf den Wert K1 wieder zurückgesetzt und die betreffende Abfragestelle wird erneut abgefragt. Ein Abfrageergebnis bewirkt dann eine Rücksetzung auf den Wert 1, ein Ausbleiben eines Abfrageergebnisses dagegen bewirkt eine erneute Erhöhung um den Wert 1 pro Abfragezyklus. In diesem bekannten Falle handelt es sich also gleichsam um zwei Zähler, die pro Abfragestelle vorgesehen sind, und von denen ein erster nach einem ersten erfolglosen Abfragevorgang bis zu einem ersten Endwert (K1) und ein zweiter nach jedem wiederholt erfolglosen Abfragevorgang bis zu einem zweiten Endwert (K2) weitergeschaltet wird und zwar jeweils bei jedem der Abfragezyklen. - Die hierin behandelte Technik bezieht sich auf den Defekt-Fall, der bei Abfragestellen auftreten kann. In einem solchen Fall wird - wenn er an einer Abfragestelle erstmalig auftritt - diese Abfragestelle während mehrerer nachfolgender Abfragezyklen nicht abgefragt, und wird erst danach wieder ein Mal abgefragt. Zeigt sich erneut auch hierbei die Defekt-Situation, so wird die betreffende Abfragestelle während einer Mehrzahl von Abfragezyklen nicht abgefragt. In diesem bekannten Falle wird also nach Eintritt eines Defektfalles an einer Abfragestelle diese mehrmals nicht abgefragt, und sie wird bei Fortbestand der Defekt-Situation ebenfalls bei mehreren darauffolgenden Abfragezyklen nicht abgefragt, d.h. übersprungen. Die Anzahl der Überspringungen ist nach erstmaligem Auftreten eines Defekt-Falles eine andere als nach einem wiederholt aufgetretenen Defekt-Fall an einer Abfragestelle. Die hierdurch bekannte Technik bezieht sich speziell auf die Behandlung einer Abfragestelle in der Defekt-Situation, wobei also auch noch hinsichtlich der Anzahl von Überspringungen unterschieden wird zwischen erstmaligem Auftreten eines Defekt-Falles und einem wiederholten Feststellen der Defekt-Situation. Im Hinblick auf die Möglichkeit des Eintretens eines Defekt-Falles ist es in diesem bekannten Falle möglich, nach Eintreten eines Defekt-Falles eine Mehrzahl von Abfragevorgängen abzuzählen, um die betreffende Abfragestelle erst danach erneut abzufragen. Diese Behandlung unterscheidet dann auch noch zwischen nur kurzzeitigen Defekt-Situationen und Langzeit-Defektsituationen. Im Gegensatz hierzu geht es erfindungsgemäß darum, dann, wenn an einer Abfragestelle bei einem Abfragevorgang eine Information nicht vorliegt, die Abfragehäufigkeit lediglich nur etwas herabzusetzen. Im bekannten Falle dagegen werden bei Eintreten der Defekt-Situation die Abfragevorgänge so reduziert, daß praktisch nur noch überwacht wird, ob und wann die Defekt-Situation wieder beendet ist. Erfindungsgemäß wird demgegenüber die Abfragehäufigkeit nur etwas gedrosselt und zwar auf eine besonders einfache Weise. Dies wird bewerkstelligt durch das an der Speicherstelle einer jeden Ansteueradresse speicherbare Merkbit, das immer dann gewonnen und gespeichert wird, wenn bei Ansteuerung einer Abfragestelle eine dabei erwartete Information ausbleibt, und das bewirkt, daß die Ansteuerung einer Abfragestelle immer dann einmal unterbleibt, wenn bei Erreichen einer Speicherstelle das Merkbit bereits vorgefunden wird, wobei auch das bis dahin gespeicherte Merkbit wieder gelöscht wird.

Die Erfindung unterscheidet sich von den beiden zuletzt behandelten bekannten Anordnungen durch die besondere Einfachheit der angegebenen Lösung. Er ermöglicht es, für verschiedene Abfragestellen, für die verschiedene Abfragefrequenzen durch die Häufigkeit der Speicherung der Ansteuerungsadressen der verschiedenen Abfragestellen festgelegt sind, im wesentlichen beizubehalten und dennoch dabei die Abfragehäufigkeit pro Abfragestelle etwas zu drosseln, und zwar in Abhängigkeit davon, ob jeweils bei einem Abfragevorgang eine Information erhalten wurde oder nicht, einmal danach eine Abfrage zu überspringen - oder nicht.

Erfindungsgemäß wird also die Abfragehäufigkeit für eine Abfragestelle etwa auf die Hälfte herabgesetzt, sobald und solange von einer Abfragestelle keine Information erhalten wird. Demgemäß wird also eine Abfragestelle, deren Adresse mehrfach, z.B. dreimal im Abfragezyklus vorkommt, und die bei einem Abfragevorgang erstmalig keine Information geliefert hat, aufgrund dessen noch nicht beim nächsten Abfragevorgang übersprungen, sondern erst bei einem etwas späteren Abfragevorgang, z.B. (siehe oben) bei dem darauf folgenden Abfragevorgang. Eine hierin liegende gewisse Trägheit der Regelung wirkt sich aber nur ganz geringfügig aus, weil an einer Abfragestelle, bei der ein Ausbleiben einer zum Abfragen erwarteten Information auftritt, ohnehin kein nennenswert hoher Andrang an Informationen vorliegen kann. Das die Häufigkeit der Abfragevorgänge für die betreffende Abfragestelle regelnde Überspringen derselben bezüglich der Abfragevorgänge kommt - wenngleich geringfügig später - so aber doch noch so frühzeitig zum Tragen, daß ein sprunghaftes Wiederansteigen der Anzahl abzufragender Informationen an der betreffenden Abfragestelle (auf das sich also das Überspringen negativ auswirken könnte) insoweit noch nicht eingetreten sein kann. Vielmehr wirkt sich auch das etwas verzögert zur Wirkung kommende Überspringen entlastend für die Informationsabfrageeinrichtungen aus und ermöglicht die Anpassung der Abfragehäufigkeit an die jeweilige Menge der pro Abfragestelle vorliegenden und abzufragenden Informationen.

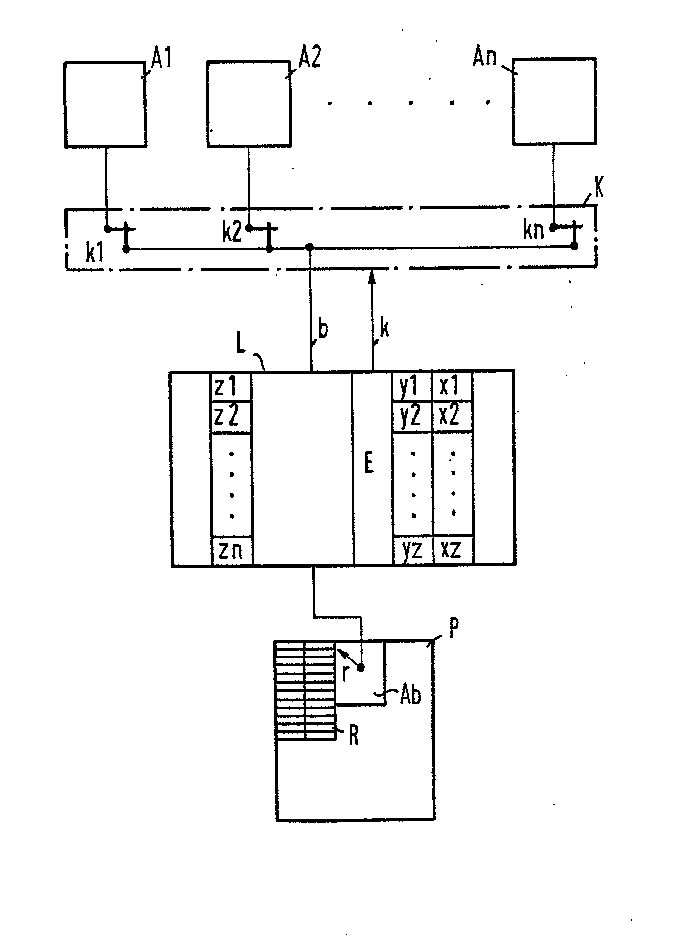

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist.

Das Ausführungsbeispiel zeigt auszugsweise eine Schaltungsanordnung der Fernsprechvermittlungstechnik, die in ihren vielfältigen Realisierungsmöglichkeiten als bekannt vorausgesetzt wird. Im vorliegenden Falle möge es sich um eine zentralgesteuerte Fernsprechvermittlungsanlage handeln, bei der die gesamten Steuerungsvorgänge, z.B. Verbindungsherstellungsvorgänge, zentral und/oder teilzentral gesteuert werden. Deren Abwicklung möge ein zentrales oder teilzentrales informationsverarbeitendes Schaltwerk P dienen. Naturgemäß hat es eine hinsichtlich der Informations-Verarbeitungskapazität begrenzte Leistungsfähigkeit.

In Fernsprechvermittlungsanlagen sind verbindungsindividuelle Schalteinrichtungen in großer Anzahl vorhanden. Bei diesen verbindungsindividuellen Schalteinrichtungen kann es sich um Teilnehmeranschlußschaltungen, Wahlempfangssätze, Verbindungssätze, Leitungsabschlußschaltungen von Orts- und Fernverbindungsleitungen und dergleichen handeln. Im Falle der Ausbildung der Fernsprechvermittlungsanlage in PCM-Technik möge es sich bei den genannten verbindungsindividuellen Schalteinrichtungen um Ports in den Anschlußgruppen handeln. Detaillierte Zusammenhänge hierüber sind in der Beschreibung des Digitalvermittlungssystems EWSD im Beiheft der Zeitschrift "telcom report" von 1981 sehr detailliert beschrieben.

In den verbindungsindividuellen Schalteinrichtungen treffen Informationen ein, die zu verarbeiten sind. Hierbei handelt es sich um sämtliche Schaltkennzeichen, die von Teilnehmerstellen aus abgegeben werden, von denen aus Teilnehmer Verbindungen herzustellen beabsichtigen. Entsprechendes gilt für verbindungsindividuelle Schalteinrichtungen, die nicht teilnehmerindividuell sind, z.B. Verbindungssätze, Leitungsabschlußschaltungen und dergleichen.

Sämtliche in den verbindungsindividuellen Schalteinrichtungen eintreffenden Informationen sind an zentraler oder teilzentraler Stelle zu verarbeiten. Diese Informationen werden in an sich bekannter Weise mit Hilfe von Scan-Vorgängen laufend abgefragt, d.h. von den verbindungsindividuellen Schalteinrichtungen durch Informationsabfrageeinrichtungen abgerufen.

Im oberen Teil der Zeichnung sind Abfragestellen A1, A2, bis An angedeutet. Unterhalb davon ist auszugsweise eine Koppeleinrichtung K, eine Informationsabfrageeinrichtung L, zu der auch diese Koppeleinrichtung gehört, und ein zentraler Prozessor P auszugsweise wiedergegeben. In diesem Zusammenhang sei auf die deutsche Offenlegungsschrift 3 128 365 verwiesen, in der ein Anwendungsfall für die erfindungsgemäße Schaltungsanordnung erläutert ist. In diesem bekannten Fall wären die Abfragestellen Puffereinrichtungen; die Informationsabfrageeinrichtung wäre eine Eingabe-/Ausgabe-Einrichtung. Die bekannte Anordnung kann in der erfindungsgemäßen Weise ausgebildet werden. Außerdem ist in der bereits erwähnten Zeitschrift "telcom report" ein entsprechendes Digitalvermittlungssystem beschrieben.

Die in der Zeichnung auszugsweise wiedergegebene Informationsabfrageeinrichtung L steuert die Vielzahl von Abfragestellen A1 bis An regelmäßig mit Hilfe der ihr zugeordneten Koppeleinrichtung K an, die Koppelschaltmittel k1 bis kn pro Abfragestelle aufweist. Die Steuerung der Koppeleinrichtung K durch die Informationsabfrageeinrichtung L erfolgt über einen Steuerweg k in an sich bekannter und deshalb nicht im einzelnen beschriebener Weise. Die Ansteuerung kann auch in ebenfalls bekannter Weise mit Hilfe von Adressen erfolgen, die über ein Adressenvielfach zu den Abfragestellen hin übertragen werden, in denen dann entsprechende Anschaltemittel die jeweilige Abfragestelle an einen gemeinsamen Datenbus anschaltet. In diesem Falle wären also die Koppelschaltmittel k1 bis kn in den Abfragestellen A1 bis An untergebracht. Ebenso ist es möglich, die Ansteuerung der Abfragestellen durch die Informationsabfrageeinrichtung L über einen gemeinsamen Datenbus im Zeitmultipex in an sich bekannter Weise zu bewerkstelligen.

Die Informationsabfrageeinrichtung L steuert also die Abfragestellen A1 bis An zum Abruf von gegebenenfalls in den Abfragestellen vorliegenden Informationen regelmäßig nacheinnander an. Diese Ansteuerung erfolgt mit hinsichtlich der verschiedenen Abfragestellen unterschiedlichen Abfragefrequenzen. Dies wird dadurch bewerkstelligt, daß bei jedem Abfragezyklus einige der Abfragestellen je nur ein Mal, andere Abfragestellen zwei Mal, andere drei Mal u.s.w. angesteuert werden, wodurch also die Abfrage hinsichtlich der verschiedenen Abfragestellen mit unterschiedlicher Häufigkeit erfolgt. Wie im einzelnen noch detailliert erläutert werden wird, vermag die Informationsabfrageeinrichtung L außerdem die Abfragefrequenz jeweils bezüglich jeder der Abfragestellen in Abhängigkeit vom Auftreten abzurufender Informationen zu ändern. In dem Maße, wie jeweils bei einem Abfragezyklus Abfragestellen nicht angesteuert werden, verkürzt sich folglich der betreffende Abfragezyklus zeitlich in seiner Gesamtheit. Die Informationsabfrageeinrichtung L bewerkstelligt die Ansteuerungsvorgänge über den Steuerweg k.

Dies wird mit Hilfe einer Ansteuereinrichtung E der Informationsabfrageeinrichtung L durchgeführt. Diese enthält einen aus Speicherstellen y1 bis yz bestehenden Abfragespeicher. An jeder Speicherstelle ist je eine der Ansteuerung je einer der Abfragestellen A1 bis An dienende Adresse gespeichert. Von jeder dieser Schalteinrichtungen (Abfragestellen) ist die zugehörige Adresse wenigstens je ein Mal gespeichert und zwar von einigen nur ein Mal, von einigen zwei Mal, d.h. je ein Mal an zwei verschiedenen Speicherstellen, von einigen drei Mal, also entsprechend an drei verschiedenen Speicherstellen, usw. bis maximal z.B. acht Mal an acht verschiedenen Speicherstellen.

Die Ansteuereinrichtung E steuert die Abfragestellen dadurch an, daß sie sukzessive und in zyklischer Folge nacheinander die Speicherstellen y1 bis yz sucht - hierbei (y1 - yz) handelt es sich um einen Gesamtansteuerungszyklus im einleitend angegebenen Sinne - und einzeln nacheinander die in ihnen gespeicherten Adressen der verschiedenen Abfrageeinrichtungen liest und die dabei erhaltenen Adressen an die Koppeleinrichtung K sukzessive nacheinander überträgt. Hier bewirken sie einzeln nacheinander die Anschaltung der jeweiligen Abfragestellen an einen Prozessor P, der mit Hilfe einer Abrufeinrichtung Ab die auf diese Weise jeweils angesteuerte Abfragestelle auf Vorliegen einer abrufbaren Information abfragt. Erhält die Abrufeinrichtung Ab über einen Datenweg b und über die Informationsabfrageeinrichtung L, gegebenenfalls unter kurzzeitiger Zwischenspeicherung in einem Speicher mit pro Ansteuereinrichtung vorgesehenen Speicherzellen z1 - zn, eine Information, so speichert sie diese mit Hilfe einer Schreibeinrichtung r in einem Listenspeicher R des Prozessors P in an sich bekannter Weise, der sie zur Verarbeitung wiederum von hier nach und nach abruft.

Die verschiedenen Abfragestellen werden also mit unterschiedlichen Abfragefrequenzen abgefragt, wozu die genannte Anzahl von Speicherungen der Adressen der Abfragestellen dient. Ist eine Adresse einer Abfragestelle in dieser Weise mehrmals im Abfragespeicher gespeichert, so sind diese Speicherungen in der Reihe der Speicherstellen y1 bis yz so gleichmäßig verteilt, daß die betreffende Abfragestelle in ungefähr gleichen Zeitabständen nacheinander angesteuert wird. In dem aus den Speicherstellen y1 bis yz bestehenden Abfragespeicher ist also die individuelle Anzahl von Ansteuerungsvorgängen pro Abfragestelle durch die Anzahl von Speicherungen von deren jeweiliger Adresse gespeichert, und zwar durch die Anzahl von Adressenspeicherungen pro Abfragestelle.

Die der Abfragefrequenz gleichkommende Abfragehäufigkeit für die Abfragestellen ist nicht nur durch die beschriebene Anzahl von Speicherungen von Adressen pro Abfragestellen bestimmt, sondern wird durch die Informationsabfrageeinrichtung L außerdem in Abhängigkeit vom Auftreten einer abzurufenden Information fallweise geändert. Immer, wenn eine Abfragestelle bei einem Abgefragtwerden durch Ansteuerung mittels ihrer Adresse keine Information geliefert hat, also jedesmal bei Ausbleiben einer nach Ansteuerung einer Abfragestelle mit der jeweiligen Adresse von dieser Abfragestelle jeweils erwarteten Information wird der als nächster vorgesehener Ansteuerungsvorgang unterdrückt. Wiederholt sich dies für eine Abfragestelle laufend, so wird dadurch die Abfragehäufigkeit für jene also auf die Hälfte herabgesetzt.

Um dies zu bewerkstelligen, ist erfindungsgemäß vorgesehen, daß zusätzlich zu jeder der Adressenspeicherungen an den Speicherstellen y1 is yz in Zuordnung zu jeder von ihnen ein bei Ausbleiben einer nach Ansteuerung einer Abfragestelle mittels der jeweiligen Adresse von dieser Abfragestelle jeweils erwarteten Information gebildetes Merkbit speicherbar ist, und zwar an Speicherplätzen x1 bis xz. Wird im Zuge des beschriebenen sukzessiven Lesens der Speicherstellen y1 is yz eine solche Speicherstelle das nächste Mal erreicht, an der also das Merkbit gespeichert ist, so wird die an dieser Speicherstelle gespeicherte Adresse nicht ausgelesen. Hierbei wird sowohl das an dem betreffenden Speicherplatz, zum Beispiel x2 gespeicherte Merkbit wieder gelöscht, als auch die Ansteuerung der betreffenden Abfragestelle einmal unterdrückt. Jedes Mal wenn also eine Adresse aus einer Speicherstelle gelesen wird, wird zugleich geprüft, ob an dem dieser Speicherstelle, zum Beispiel y2, zugeordneten Speicherplatz, zum Beispiel x2, ein Merkbit bereits gespeichert ist. Bei Vorliegen eines hier gespeicherten Merkbits wird eine Ansteuerung der betreffenden mittels dieser Adresse ansteuerbaren Abfragestelle unterdrückt und ein hierbei bereits gespeichertes Merkbit wieder gelöscht. Dagegen wird bei Ausbleiben einer nach Ansteuerung einer Abfragestelle jeweils erwarteten Information wird das Merkbit in Zuordnung zu der betreffenden Adresse, also an dem der betreffenden Speicherstelle entsprechenden Speicherplatz erneut gespeichert.

Die zuvor beschriebenen Vorgänge werden durch die Ansteuereinrichtung E bewerkstelligt. Immer, wenn sie aus einer der Speicherstellen, z.B. y2, erneut eine Adresse einer Abfragestelle gelesen hat, prüft sie, ob an diesem Speicherplatz, z.B. bei x2, das Merkbit gespeichert ist. Wenn dies zutrifft, löscht die Ansteuereinrichtung dasselbe sowie die zuvor gelesene Adresse der Abfragestelle und schaltet den zyklischen Lesevorgang um eine Speicherstelle weiter, wodurch die mit der letzten Adresse vorbereitete Ansteuerung einer Abfragestelle ein Mal unterdrückt ist, weil bei der betreffenden früheren Ansteuerung derselben Abfragestelle beim vorigen Ansteuerzyklus keine Information erhalten wurde.

Die Erfindung hat nicht nur für den Anwendungsfall Bedeutung, daß die Abfragestellen A1 bis An verbindungsindividuelle Schalteinrichtungen sind, sondern insbesondere auch dafür, daß diese Abfragestellen Zwischenspeicher (Message Buffer) von Teilsteuerwerken von Anschlußgruppen sind (vergleiche die Beschreibungen in der oben bereits erwähnten Zeitschrift "telcom report"). In einem solchen Anwendungsfall umfassen die Abfragestellen also u.a. Speicher für je eine ganze Anzahl von Informationen, die sukzessive nacheinander abzuholen sind. Durch die Erfindung können die Abfragevorgänge nach Maßgabe des jeweiligen Andranges von in jedem der Zwischenspeicher abrufbereiten und dem Prozessor P zur Verarbeitung zuzuführenden Informationen auf diese Zwischenspeicher fallweise und bedarfsgemäß verschieden konzentriert werden.

Sobald und solange von einer Abfragestelle keine Information erhalten wird, wird also die Abfragehäufigkeit für eine Abfragestelle etwa auf die Hälfte herabgesetzt. Demgemäß wird also eine Abfragestelle, deren Adresse mehrfach , zum Beispiel dreimal im Abfragezyklus vorkommt, und die bei einem Abfragevorgang erstmalig keine Information geliefert hat, aufgrund dessen noch nicht beim nächsten Abfragevorgang übersprungen, sondern erst bei einem etwas späteren Abfragevorgang, zum Beispiel (siehe oben) bei dem darauf folgenden dritten Abfragevorgang. Eine hierin liegende gewisse Trägheit der Regelung wirkt sich aber nur ganz geringfügig aus, weil an einer Abfragestelle, bei der ein Ausbleiben einer zum Abfragen erwarteten Information auftritt, ohnehin kein nennenswert hoher Andrang an Informationen vorliegen kann. Das die Häufigkeit der Abfragevorgänge für die betreffende Abfragestelle regelnde Überspringen derselben bezüglich der Abfragevorgänge kommt - wenngleich geringfügig später - so aber doch noch so frühzeitig zum Tragen, daß ein sprunghaftes Wiederansteigen der Anzahl abzufragender Informationen an der betreffenden Abfragestelle (auf das sich also das Überspringen negativ auswirken könnte) insoweit noch nicht eingetreten sein kann. Vielmehr wirkt sich auch das erst etwas verzögert zur Wirkung kommende Überspringen entlastend für die Informationsabfrageeinrichtungen aus und ermöglicht die Anpassung der Abfragehäufigkeit an die jeweilige Menge der pro Abfragestelle vorliegenden und abzufragenden Informationen.

Bezugszeichenliste

| | |
|---|---|
| Al–An | Abfragestellen |
| K | Koppeleinrichtung |
| kl–kn | Koppelschaltmittel |
| k | Steuerweg |
| b | Datenweg |
| L | Informationsabfrageeinrichtung |
| E | Ansteuereinrichtung |
| yl–yz | Speicherstellen für Adressen |
| xl–xz | Speicherplätze für Merkbits |
| zl–zn | Speicherzellen für Informationen |
| P | zentraler Prozessor |
| Ab | Abrufeinrichtung |
| r | Schreibeinrichutng |
| R | Listenspeicher |

**Patentansprüche**

1. Schaltungsanordnung für Fernmeldeanlagen, insbesondere Fernsprechvermittlungsanlagen, mit eine Vielzahl von Abfragestellen (A1 - An) zyklisch ansteuernden Informationsabfrageeinrichtungen (L), die die Abfragestellen (A1 - An) zum Abruf gegebenenfalls vorliegender Informationen mit hinsichtlich der verschiedenen Abfragestellen (A1 - An) unterschiedlichen Abfragefrequenzen ansteuern und die Abfragefrequenz jeweils bezüglich einer Abfragestelle (z.B. A1) in Abhängigkeit vom Auftreten einer abzurufenden Information ändern, und mit den Informationsabfrageeinrichtungen (L) zugeordneten Abfragespeichern (y1 - yz), in denen für jede der Abfragestellen (A1 - An) einzeln die individuelle Anzahl von Ansteuerungsvorgängen innerhalb eines jeweils sämtliche Abfragestellen erfassenden Gesamtansteuerungszyklusses gespeichert ist, wobei in dem Abfragespeicher (y1 - yz) für jede der Abfragestellen die individuelle Anzahl von Ansteuerungsvorgängen mittels entsprechend ein- oder mehrmaliger Speicherung ihrer jeweiligen Adresse an einer dementsprechenden Zahl von Speicherstellen gespeichert ist, die innerhalb der zyklischen Folge der Gesamtheit der Speicherstellen (y1 - yz) verteilt, insbesondere regelmäßig verteilt sind und sukzessive nacheinander gelesen werden, und in denen in Zuordnung zu den Ansteuerungsadressen der Abfragestellen (A1 - An) Zusatzinformationen (im x1 - xz) speicherbar sind, die in Abhängigkeit von den einzelnen Abfragevorgängen laufenden Veränderungen unterliegen, und mit deren Hilfe die Reihenfolge des Lesens der Ansteuerungsadressen und damit die Reihenfolge der jeweils weiteren Ansteuerungen der Abfragestellen (A1 - An) steuerbar ist, dadurch gekennzeichnet, daß die Zusatzinformation (im x1 - xz) auf ein Merkbit beschränkt ist und an der Speicherstelle (x1 - xz) einer jeden Ansteuerungsadresse einer jeden Abfragestelle (z.B. A1) zusammen mit dieser Ansteuerungsadresse speicherbar ist, und daß dieses Merkbit wechselnd speicherbar und löschbar ist in der Weise, daß es einerseits immer dann gewonnen und gespeichert wird, wenn bei Ansteuerung einer Abfragestelle eine dabei erwartete Information ausbleibt, und daß andererseits bei Erreichen einer Speicherstelle (z.B. y2), an der bei der betreffenden Ansteuerungsadresse bereits ein Merkbit (z.B. in x2) gespeichert ist, sowohl eine Ansteuerung der betreffenden Abfragestelle (z.B. A2), insbesondere ein Lesen der an der Speicherstelle (z.B. y2) gespeicherten Ansteuerungsadresse, mittels des Merkbits verhindert wird, als auch das gespeicherte Merkbit wieder gelöscht wird.

## Claims

1. Circuit arrangement for telecommunication systems, preferably telephone exchanges, having information interrogation devices (L) which cyclically select a plurality of interrogation points (A1 - An), which information interrogation devices select the interrogation points (A1 - An) to call up any information present at different interrogation frequencies with respect to the different interrogation points (A1 - An), and vary the interrogation frequency in each case for an interrogation point (e.g. Al) depending on the occurrence of an information item to be called up, and having interrogation memories (y1 - yz) which are associated with the information interrogation devices (L) and in which the individual number of selection operations within an overall selection cycle registering in each case all interrogation points is stored individually for each of the interrogation points (A1 - An), the individual number of selection operations being stored in the interrogation memory (y1 - yz) for each of the interrogation points by means of correspondingly single or multiple storage of their respective addresses at a corresponding number of memory locations, which are distributed, preferably regularly distributed, within the cyclical succession of the entirety of the memory locations (y1 - yz) and are successively read one after the other, and in which, in association with the selection addresses of the interrogation points (A1 - An), additional information (in x1 - xz) can be stored, which is constantly changed depending on the individual interrogation operations, and with the aid of which the sequence of reading of the selection addresses, and hence the sequence of the respective further selections of the interrogation points (A1 - An), can be controlled, characterized in that the additional information (in x1 - xz) is restricted to a flag bit, and can be stored at the memory location (x1 - xz) of each selection address of each interrogation point (e.g. A1) together with this selection address, and in that said flag bit can be alternately stored and erased in such a way that, on the one hand, it is always obtained and stored when an expected information item fails to appear when an interrogation point is selected, and that on the other hand, when a memory location (e.g. y2) at which a flag bit (e.g. in x2) is already stored for the respective selection address is reached, both a selection of the respective interrogation point (e.g. A2), in particular a reading of the selection address stored at the memory location (e.g. y2), is prevented by means of the flag bit, and the stored flag bit is erased again.

## Revendications

1. Montage pour des installations de télécommunications, notamment des centraux téléphoniques, comportant une multiplicité de dispositifs (L) d'interrogation d'informations, qui commandent cycliquement une multiplicité de postes d'interrogation (A1-An) et exécutent la commande de ces postes d'interrogation (A1-An) pour appeler des informations éventuellement présentes avec des fréquences d'interrogation différentes en rapport avec les différents postes d'interrogation (A1-An) et modifient la fréquence d'interrogation respectivement en rapport avec un poste d'interrogation (par exemple A1), en fonction de l'apparition d'une information devant être appelée, et comportant des mémoires d'interrogations (y1-yz), qui sont associées aux dispositifs (L) d'interrogation d'informations et dans lesquelles est mémorisé individuellement, pour chacun des postes d'interrogation (A1-An), le nombre individuel d'opérations de commande à l'intérieur d'un cycle respectif de commande globale s'appliquant respectivement à tous les postes d'interrogation, et dans lequel le nombre individuel d'opérations de commande est mémorisé dans la mémoire d'interrogations (y1-yz) pour chacun des postes d'interrogation, au moyen de la mémorisation correspondante unique ou réitérée de l'adresse respective dudit poste, en un nombre correspondant d'emplacements de mémoire, qui sont répartis, notamment régulièrement, à l'intérieur de la suite cyclique de l'ensemble des emplacements de mémoire (y1-yz) et sont lus successivement et dans lesquels peuvent être mémorisées, en association avec les adresses de commande des postes d'interrogation (A1-An), des informations supplémentaires (x1-xz), qui sont soumises à des variations intervenant en fonction des différentes opérations d'interrogation, et à l'aide desquels peuvent être commandées la séquence de lecture des adresses de commande et par conséquent la séquence des autres commandes respectives des postes d'interrogation (A1-An), caractérisé par le fait que l'information supplémentaire (dans x1-xz) est limitée à un bit de marquage et peut être mémorisée à l'emplacement de mémoire (x1-xz) de chaque adresse de commande de chaque poste d'interrogation (par exemple A1) conjointement avec cette adresse de commande, et que ce bit de marquage peut être en alternance mémorisé et effacé de telle sorte que d'une part il est toujours obtenu et mémorisé lorsque, lors de la commande d'un poste d'interrogation, une information attendue est absente, et que d'autre part, lorsqu'un emplacement de mémoire (par exemple y2), dans lequel un bit de marquage est déjà mémorisé (par exemple dans x2), pour l'adresse considérée de commande, est atteint, aussi bien une commande du poste d'interrogation considéré (par exemple A2), notamment une lecture de l'adresse de commande mémorisée à l'emplacement de mémoire (par exemple y2), est empêchée à l'aide du bit de marquage et également le bit de marquage mémorisé est à nouveau effacé.